# EUROPÄISCHE PATENTSCHRIFT

(11) **EP 0 594 796 B1**
(45) Veröffentlichungstag und Bekanntmachung des Hinweises auf die Patenterteilung: **07.05.1997**
(21) Anmeldenummer: 93901945.1
(22) Anmeldetag: 10.06.1992
(51) Int. Cl.: G01H 11/08

(54) **KLOPFSENSOR**
KNOCK SENSOR
DETECTEUR DE COGNEMENT

(30) Priorität: 18.07.1991 DE 4123786
(43) Veröffentlichungstag der Anmeldung: 04.05.1994
(73) Patentinhaber: ROBERT BOSCH GMBH, 70442 Stuttgart (DE)
(72) Erfinder: ENTENMANN, Robert, D-7141 Benningen (DE); BONITZ, Joerg, D-7130 Muehlacker (DE); UNLAND, Stefan, D-7141 Schwieberdingen (DE); FRIES, Romuald, D-7157 Ditzingen-Heimerdingen (DE); SLOBODA, Robert, D-7145 Markgroeningen (DE); SCHENK, Klaus, D-7120 Bietigheim-Bissingen (DE); DUMS, Karl, D-7253 Renningen-Malmsheim (DE)
(86) Internationale Anmeldenummer: DE9200475
(87) Internationale Veröffentlichungsnummer: WO9302341

(56) Entgegenhaltungen:
- EP-A- 0 324 187
- DE-A- 3 027 254
- DE-A- 4 024 339

## Beschreibung

### Stand der Technik

Die Erfindung geht aus von einem Klopfsensor nach der Gattung des Hauptanspruchs. Bei einem derartigen, zum Beispiel aus der US-PS 4 966 031 oder der DE-OS 40 24 339 bekannten Klopfsensor ist die piezoelektrische Scheibe zwischen zwei Kontaktscheiben angeordnet, die jeweils von einer Isolierscheibe abgedeckt sind. Diese Isolierscheiben bestehen aber in allen Fällen aus elektrisch nicht leitendem Material. Bei piezoelektrischen Werkstoffen kann es aber bei hohen Temperaturen, insbesondere bei Temperaturwechseln zu einer elektrischen Aufladung kommen, die zu hohen elektrischen Spannungen führen kann. Dadurch sind Fehlmessungen und Störungen in der angeschlossenen Schaltung möglich.

Dokument DE-A-3 027 245, offenbart einen Klopfsensor, wobei die piezoelektrische Scheibe zwischen zwei Kontaktscheiben angeordnet ist, die jeweils von einer Isolierscheibe abgedeckt sind. Meßwertverfälschungen, die durch starke kapazitive Aufladung des piezoelektrischen Elements auftreten können, werden vermieden dadurch, daß die kapazitive Aufladungen abgeleitet wird; entweder durch ein Wiederstandspapier, das um die piezoelektrische Scheibe herumgelegt wird, oder mittels einer Vergußmasse mit einer leitenden Füllung.

### Vorteile der Erfindung

Der erfindungsgemäße Klopfsensor mit den kennzeichnenden Merkmalen des Hauptanspruchs hat demgegenüber den Vorteil, daß ein Ableitwiderstand für die durch den pyroelektrischen Effekt entstandenen Ladungen ohne zusätzliche Bauteile oder einer Änderung der bisherigen Fertigungseinrichtungen möglich ist. In besonders kostengünstiger Weise können diese störenden Ladungen abgeleitet werden. Die Genauigkeit des Klopfsensors und seine Störempfindlichkeit kann dadurch entscheidend verbessert werden.

Durch die in den Unteransprüchen aufgeführten Maßnahmen sind vorteilhafte Weiterbildungen der im Hauptanspruch angegebenen Merkmale möglich.

### Zeichnung

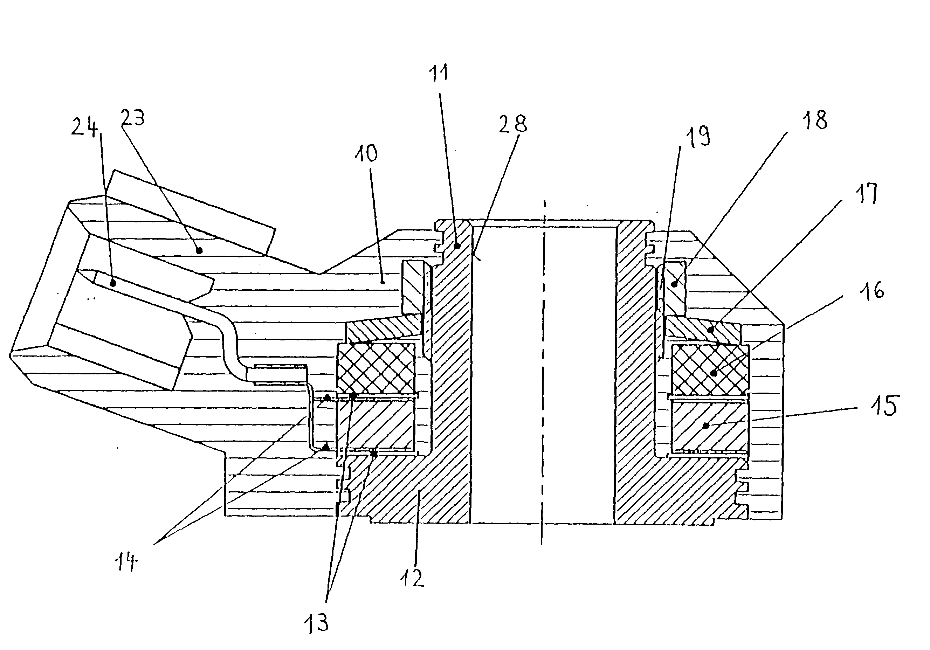

Ein Ausführungsbeispiel der Erfindung ist in der Zeichnung dargestellt und in der nachfolgenden Beschreibung näher erläutert. Die einzige Figur zeigt einen Längsschnitt durch einen Klopfsensor.

### Beschreibung des Ausführungsbeispiels

Der in der Figur dargestellte Klopfsensor weist ein Gehäuse 10 auf, in dem eine Druckhülse 11 angeordnet ist, die nahe ihrem unteren Ende einen flanschartigen Rand 12 aufweist. Am Außenumfang dieser Druckhülse 11, ausgehend vom Rand 12 sind folgende Teile angeordnet: Eine Isolierscheibe 13, eine Kontaktscheibe 14, eine piezokeramische Scheibe 15, und in umgekehrter Reihenfolge jetzt eine zweite Kontaktscheibe 14 und eine zweite Isolierscheibe 13. Darauf ist eine seismische Masse 16 aufgesetzt. Auf diese genannten Teile wirkt eine Tellerfeder 17 ein, deren Vorspannung durch einen Gewindering 18 erzeugt wird, welcher auf ein Außengewinde 19 am oberen Teil der Druckhülse 11 aufgeschraubt ist.

Im integrierten Anschlußstecker 23 des aus Kunststoff bestehenden und insbesondere im Spritzgußverfahren hergestellten Gehäuses 10 sind Flachstecker 24 eingespritzt. Die Flachstecker 24 sind mit den beiden Kontaktscheiben 14 verbunden. Durch die Bohrung 28 der Druckhülse 11 ragt eine nicht dargestellte Befestigungsschraube, mit welcher der Klopfsensor mittel- oder unmittelbar an einer Brennkraftmaschine befestigbar ist. Der Klopfsensor kann somit gleichzeitig als Unterlegscheibe dienen.

Das gesamte von der Befestigungsschraube ausgeübte Drehmoment wird auf die Druckhülse 11 übertragen, das heißt auf die piezokeramische Scheibe 15 wirkt keine Kraft von der Befestigungsschraube her. Durch den Gewindering 18 läßt sich die Vorspannkraft der Tellerfeder 17 so einstellen, daß an der piezokeramischen Scheibe gerade noch ohne bleibende Verschlechterung ihres elektrischen Signals ertragbare Axialkräfte wirksam sind und diese auch von thermischen Dehnungen sowie unvermeindlichen Stauchungen der Druckhülse bei der Montage weitestgehend unabhängig ist. Die von der seismischen Masse 16 proportional zu den Schwingungen der Brennkraftmaschine ausgeübten Impulse werden in der piezokeramischen Scheibe 15 in Ströme umgewandelt, die an einem entsprechenden Meßgerät abgelesen werden können.

In bekannter Weise sind die Kontaktscheiben 14 aus elektrisch leitfähigem Material hergestellt. Im Unterschied zu den bisherigen Lösungen sind die beiden Isolierscheiben 13 ebenfalls aus leicht leitfähigem Material hergestellt. Diese elektrische Leitfähigkeit muß geringer sein als die der Kontaktscheiben 14. Sie soll in etwa in einem Bereich von 100 kΩ bis 1 GΩ liegen. Diese geringe Leitfähigkeit der Isolierscheiben 13 kann man in einfacher Weise dadurch erreichen, daß man dem bisherigen Material elektrisch leitfähige Zusatzstoffe beimischt. So kann zum Beispiel den bisherigen aus Polyethylenterephtalat bestehenden Isolierscheiben ein Zusatzstoff auf Kohlenstoff oder Metallbasis beigemischt werden. Das jeweilige Mischungsverhältnis bestimmt dann die gewünschte Widerstandshöhe und die gewünschte Leitfähigkeit der Isolierscheiben 13. Die Isolierscheiben 13 sind dabei nur so stark elektrisch leitend auszubilden, daß sie die durch den pyroelektrischen Effekt der piezokeramischen Scheibe 15 entstehenden Spannungsspitzen ableiten können.

In einer anderen Ausführung wäre es auch möglich, die Isolierscheiben 13 weiterhin aus elektrisch nicht leitendem Material herzustellen, aber die piezokeramische Scheibe 15, insbesondere in dem Randbereich, mit elektrisch leitfähigen Ionen zu dotieren. Piezokeramische Scheiben werden bekanntlich im Sinterverfahren hergestellt. Die Dotierung zum Beispiel mit den Elementen Niob, Antimon kann in, wie aus der Halbleitertechnologie bekannter Weise durchgeführt werden bzw. durch entsprechende Führung des Kreramikbrandes hergestellt werden. Ferner wäre es auch möglich, beide obengenannten Ausführungsarten miteinander in einem Klopfsensor zu kombinieren und somit die Isolierscheiben 13 leicht elektrisch leitend auszubilden und die piezokeramische Scheibe mit elektrisch leitfähigen Teilen zu dotieren. Die oben beschriebenen Ausführungen sind nicht auf die Verwendung von piezokeramischen Scheiben zur Meßsignalgewinnung beschränkt, sondern können auch für alle anderen nach dem piezoelektrischen Prinzip arbeitenden Elemente verwendet werden.

## Patentansprüche

1. Klopfsensor zur mittel- oder unmittelbaren Befestigung an einer Brennkraftmaschine mit mindestens einem, in einem Gehäuse (10) zwischen Kontaktscheiben (14) angeordneten piezoelektrischem Element (15), auf das eine seismische Masse (16) einwirkt, und wobei sich zwischen den Kontaktscheiben (14) und der seismischen Masse (16) bzw. zwischen den Kontaktscheiben (14) und der Auflagefläche (12) des/der piezoelektrischen Elemente (15) Isolierscheiben (13) befinden, dadurch gekennzeichnet, daß die Isolierscheiben (13) aus elektrisch leitfähigem Material bestehen, das geringer elektrisch leitfähig ist als das Material der Kontaktscheiben (14).

2. Klopfsensor zur mittel- oder unmittelbaren Befestigung an einer Brennkraftmaschine mit mindestens einem, in einem Gehäuse (10) zwischen Kontaktscheiben (14) angeordneten piezoelektrischem Element (15), auf das eine seismische Masse (16) einwirkt, und wobei sich zwischen den Kontaktscheiben (14) und der seismischen Masse (16) bzw. zwischen den Kontaktscheiben (14) und der Auflagefläche (12) des/der piezoelektrischen Elemente (15) Isolierscheiben (13) befinden, dadurch gekennzeichnet, daß die piezoelektrischen Elemente (15) zur Erzeugung einer elektrischen Leitfähigkeit eine Dotierung aufweisen.

3. Klopfsensor zur mittel- oder unmittelbaren Befestigung an einer Brennkraftmaschine mit mindestens einem, in einem Gehäuse (10) zwischen Kontaktscheiben (14) angeordneten piezoelektrischem Element (15), auf das eine seismische Masse (16) einwirkt, und wobei sich zwischen den Kontaktscheiben (14) und der seismischen Masse (16) bzw. zwischen den Kontaktscheiben (14) und der Auflagefläche (15) des/der seismischen Elemente (15) eine Isolierscheibe (13) befindet, dadurch gekennzeichnet, daß die Isolierscheibe (13) aus elektrisch leitfähigem Material besteht, das geringer elektrisch leitfähig ist als das Material der Kontaktscheiben (14), und daß die piezoelektrischen Elemente (15) zur Erzeugung einer elektrischen Leitfähigkeit eine Dotierung aufweisen.

4. Klopfsensor nach einem der Ansprüche 1 bis 3, dadurch gekennzeichnet, daß die elektrische Leitfähigkeit der piezoelektrischen Elemente (15) und/oder die Isolierscheiben (13) im Bereich von 100 kΩ bis 1 GΩ liegt.

5. Klopfsensor nach Anspruch 1, 3 oder 4, dadurch gekennzeichnet, daß die Isolierscheiben (13) aus Polyethylenterephtalat mit einem Zusatzstoff aus Kohlenstoff oder Metallbasis bestehen.

6. Klopfsensor nach einem der Ansprüche 2 bis 5, dadurch gekennzeichnet, daß die piezoelektrischen Elemente (15) mit den Elementen Niob und/oder Antimon dotiert sind.

7. Klopfsensor nach einem der Ansprüche 1 bis 6, dadurch gekennzeichnet, daß das piezoelektrische Element (15) und die seismische Masse (16) sowie eine auf diese Teile einwirkende Tellerfeder (17) auf einer Druckhülse (11) angeordnet sind, deren Bohrung (28) einen Durchgang für eine das Gehäuse (10) an der Brennkraftmaschine festhaltende Schraube bildet.

8. Klopfsensor nach Anspruch 7, dadurch gekennzeichnet, daß die Hülse (11) einen als Auflagefläche (12) dienenden flanschartigen Rand aufweist, auf dem sich die piezoelektrische Scheibe (15) und die seismische Masse (16) abstützen.

9. Klopfsensor nach Anspruch 7 oder 8, dadurch gekennzeichnet, daß die Vorspannung der Tellerfeder (17) durch einen auf die Druckhülse (11) aufgeschraubten Gewindering (18) erzeugt ist.

10. Klopfsensor nach einem der Ansprüche 1 bis 9, dadurch gekennzeichnet, daß das piezoelektrische Element (15) ein piezokeramisches Element ist.

## Claims

1. Knock sensor for indirect or direct attachment to an internal combustion engine, having at least one piezoelectric element (15) which is arranged in a housing (10) between contact plates (14) and on which a seismic mass (16) acts, insulating plates (13) being located between the contact plates (14) and the seismic mass (16) and/or between the contact plates (14) and the support surface (12) of the piezoelectric element or elements (15), characterized in that the insulating plates (13) are composed of electrically conductive material which is less electrically conductive than the material of the contact plates (14).

2. Knock sensor for indirect or direct attachment to an internal combustion engine, having at least one piezoelectric element (15) which is arranged in a housing (10) between contact plates (14) and on which a seismic mass (16) acts, insulating plates (13) being located between the contact plates (14) and the seismic mass (16) and/or between the contact plates (14) and the support surface (12) of the piezoelectric element or elements (15), characterized in that the piezoelectric elements (15) are doped in order to produce electrical conductivity.

3. Knock sensor for indirect or direct attachment to an internal combustion engine, having at least one piezoelectric element (15) which is arranged in a housing (10) between contact plates (14) and on which a seismic mass (16) acts, an insulating plate (13) being located between the contact plates (14) and the seismic mass (16) and/or between the contact plates (14) and the support surface (15) of the seismic element or elements (15), characterized in that the insulating plate (13) is composed of electrically conductive material which is less electrically conductive than the material of the contact plates (14), and in that the piezoelectric elements (15) are doped in order to produce electrical conductivity.

4. Knock sensor according to one of Claims 1 to 3, characterized in that the electrical conductivity of the piezoelectric elements (15) and/or the insulating plates (13) is in the range from 100 kΩ to 1 GΩ.

5. Knock sensor according to Claim 1, 3 or 4, characterized in that the insulating plates (13) are composed of polyethylene terephthalate with a carbon additive or metal-based additive.

6. Knock sensor according to one of Claims 2 to 5, characterized in that the piezoelectric elements (15) are doped with the elements niobium and/or antimony.

7. Knock sensor according to one of Claims 1 to 6, characterized in that the piezoelectric element (15) and the seismic mass (16) as well as a disc spring (17) acting on these parts are arranged on a clamping sleeve (11) whose bore (28) forms a passage for a screw which secures the housing (10) to the internal combustion engine.

8. Knock sensor according to Claim 7, characterized in that the sleeve (11) has a flange-like edge which serves as a support surface (12) and on which the piezoelectric plate (15) and the seismic mass (16) are supported.

9. Knock sensor according to Claim 7 or 8, characterized in that the prestressing of the disk spring (17) is produced by a threaded ring (18) which is screwed onto the clamping sleeve (11).

10. Knock sensor according to one of Claims 1 to 9, characterized in that the piezoelectric element (15) is a piezoceramic element.

## Revendications

1. Détecteur de cognement à fixer directement ou indirectement sur un moteur à combustion interne avec au moins un élément piézo-électrique (15), disposé dans un boîtier (10) entre des disques de contact (14), élément piézo-électrique (15) sur lequel agit une masse séismique (16) et dans le cas duquel entre les disques de contact (14) et la masse séismique (16) ou entre les disques de contact (14) et la surface d'appui (12) de l'élément piézo-électrique ou des éléments piézo-électriques (15) il se trouve des disques isolants (13),
caractérisé en ce que
les disques isolants (13) sont réalisés en une matière électriquement conductrice, qui est plus faiblement conductrice électriquement que la matière des disques de contact (14).

2. Détecteur de cognement à fixer directement ou indirectement sur un moteur à combustion interne avec au moins un élément piézo-électrique (15), disposé dans un boîtier (10) entre des disques de contact (14), élément piézo-électrique (15) sur lequel agit une masse séismique (16) et dans le cas duquel entre les disques de contact (14) et la masse séismique (16) ou entre les disques de contact (14) et la surface d'appui (12) de l'élément piézo-électrique ou des éléments piézo-électriques (15) il se trouve des disques isolants (13),
caractérisé en ce que
les éléments piézo-électriques (15), servant à produire une conductibilité électrique, présentent un dopage.

3. Détecteur de cognement à fixer directement ou indirectement sur un moteur à combustion interne avec au moins un élément piézo-électrique (15), disposé dans un boîtier (10) entre des disques de contact (14), élément piézo-électrique
(15) sur lequel agit une masse séismique (16) et dans le cas duquel entre les disques de contact (14) et la masse séismique (16) ou entre les disques de contact (14) et la surface d'appui (12) de l'élément séismique ou des éléments séismiques (15) il se trouve un disque isolant (13),
caractérisé en ce que
le disque isolant (13) est réalisé en une matière électriquement conductrice, qui est plus faiblement conductrice électriquement que la matière des disques de contact (14)
et
en ce que les éléments piézo-électriques (15), qui servent à produire une conductibilité électrique, présentent un dopage.

4. Détecteur de cognement selon l'une des revendications 1 à 3,
caractérisé en ce que
la conductibilité électrique des éléments piézo-électriques (15) et/ou les disques isolants (13) se situe dans la zone comprise entre 100 kΩ et 1GΩ.

5. Détecteur de cognement selon les revendications 1, 3 ou 4,
caractérisé en ce que
les disques isolants (13) sont réalisés en térephtalate de polyéthylène avec une matière d'addition en carbone ou à base de métal.

6. Détecteur de cognement selon l'une des revendications 2 à 5,
caractérisé en ce que
les éléments piézo-électriques (15) sont dopés avec les éléments Niobium et/ou Antimoine.

7. Détecteur de cognement selon l'une des revendications 2 à 5,
caractérisé en ce que
l'élément piézo-électrique (15) et la masse séismique (16) ainsi qu'un ressort à disques (17) agissant sur ces pièces sont disposés sur un manchon de pression (11), dont l'alésage (28) forme un passage pour une vis maintenant le boîtier (10) de façon solidaire sur le moteur à combustion interne.

8. Détecteur de cognement selon la revendication 7,
caractérisé en ce que
le manchon (11) présente un bord en forme de bride servant de surface de butée (12), bord sur lequel s'appuient les éléments piézo-électriques (15) et la masse séismique (16).

9. Détecteur de cognement selon la revendication 7,
caractérisé en ce que
la tension des ressorts Belleville (17) est produite par un anneau fileté (18) vissé sur le manchon de pression (11).

10. Détecteur de cognement selon les revendications 1 à 9,
caractérisé en ce que
l'élément piézo-électrique (15) est un élément piézo-céramique.
